# EUROPÄISCHE PATENTANMELDUNG

(11) **EP 1 226 883 A1**
(43) Veröffentlichungstag der Anmeldung: **31.07.2002**
(21) Anmeldenummer: 02007839.0
(22) Anmeldetag: 21.10.1997
(51) Int. Cl.: B09B 3/00, B03B 9/06

(54) **Verfahren zur Trennung eines Gemisches von Restabfällen**

(30) Priorität: 21.10.1996 DE 19643381; 02.12.1996 DE 19649901
(62) Teilanmeldung aus: 97952755.3
(71) Anmelder: Herhof Umwelttechnik GmbH, 35606 Solms (DE)
(72) Erfinder: Hofmann, Herrman, 35606 Solms-Niederbiel (DE)
(74) Vertreter: Zinnecker, Armin, Dipl.-Ing.

(57) **Zusammenfassung**

Ein Verfahren dient zur Trennung eines Gemisches von Restabfällen. Um ein derartiges Verfahren zu verbessern werden die Komponenten des Gemisches in eine brennbare Fraktion und in eine unbrennbare Fraktion getrennt. Die unbrennbare Fraktion enthält weniger als 5% organische Restsubstanz. Die brennbare Fraktion wird anschließend biologisch behandelt, nämlich in einem geschlossenen Behälter unter Zwangsbelüftung kompostiert und/oder stabilisiert (Fig. 1).

## Beschreibung

Die Erfindung betrifft ein Verfahren zur Trennung eines Gemisches von Restabfällen.

Gemische von Restabfällen sollen getrennt werden, um eine für die jeweilige Fraktion passende Entsorgung durchführen zu können. Ziel der anzuwendenden Trennverfahren ist die möglichst sortenreine Trennung des Stoffgemisches. Restabfallgemische stellen in dieser Hinsicht allerdings sehr schwierige Stoffgemische dar. Die ständig wechselnde Zusammensetzung der Restabfälle erfordert Verfahren, die es ermöglichen, die Heteroginität des Vielstoffgemisches "Restabfall" zu ordnen, bevor es getrennt wird. Dabei haben sich Verfahren bewährt, die insbesondere nach der Stoffdichte unterscheiden, wobei die Transportmedien Gase oder Flüssigkeiten sein können.

Die bisher bekannten Verfahren und Vorrichtungen verteuern sich mit dem geforderten Reinheitsgrad der abzutrennenden Stoffkomponenten. Die stoffliche Verwertung wird begrenzt durch die stoffliche Reinheit und den im Wettbewerb mit frischen Rohstoffen erzielbaren Marktpreis.

Bei der Aufbereitung von kommunalen Restabfällen verbleiben Restfraktionen, die entweder deponiert oder verbrannt und deponiert werden müssen. Nach zukünftig geltenden Vorschriften ist für die Deponierung eine Restorganik von weniger als 3 % in Bauschuttdeponiegut und weniger als 5 % in Hausmülldeponiegut erforderlich. Um dies zu erreichen, muß eine sortenreine Selektierung inerter Stoffe und die Veraschung brennfähiger Stoffe durchgeführt werden mit den auch hier bestehenden Emissionsrisiken der Auswaschung.

Die bisher praktizierte biologisch-mechanische Aufbereitung der Restabfälle nach Abschöpfung der Wertstoffe durch getrennte Einsammlung hat zum Ziel, die organische Substanz in den Restabfällen weitestgehend abzubauen, um sich auf diesem Weg den geforderten Werten von 3 % bzw. 5 % Restorganik zu nähern. Hierdurch entstehen allerdings Anlagen mit sehr großem Raumbedarf, da die biologische Zersetzung schwerer abbaubarer organischer Substanz nur sehr langsam erfolgt (6 bis 8 Monate) und die Restabfälle während dieser ganzen Zeit einer technischen Kontrolle und Steuerung unterliegen. Danach erfolgt teilweise eine stoffliche Trennung mittels bekannter Klassierverfahren im erdfeuchten Zustand (ca. 35 %).

Aus der Literaturstelle WLB Wasser, Luft und Boden, 11-12/1995, Seite 60 ist ein Verfahren zur mechanisch-biologischen Abfallbehandlung bekannt, bei dem Abfälle mit organischen Anteilen verwertet werden. Es handelt sich um ein dynamisches Verfahren der mechanisch-biologischen, aeroben Abfallbehandlung, das mit einer mehrstufigen Intensivrotte in einer Rottetrommel arbeitet.

Aus der DE-OS 44 34 611 ist ein Verfahren zur biologisch-mechanischen Behandlung von Abfall bekannt, bei dem der angelieferte Müll gesichtet, zerkleinert und homogenisiert wird. Anschließend wird der Müll in einer Rotte einem biologischen Abbauprozeß unterzogen. Das Rotteprodukt wird nach der Rottung in eine organische und eine anorganische Fraktion separiert.

Aus der DE-PS 32 48 494 ist ein Verfahren zum Herstellen eines Brennstoffes für eine Müllverbrennungsanlage bekannt. Um die Herstellung eines schadstoffarmen Brennstoffes mit verbessertem Heizwert zu ermöglichen, wird Hausmüll in einer ersten Siebtrommel in Überlauf und Siebdurchgang aufgeteilt. Der Überlauf wird einer Eisen-Separation unterzogen. Der Siebdurchgang wird nach einem in einem Bioreaktor erfolgenden Kompostieren in einer zweiten Siebtrommel in eine als Kompost anfallende Feinfraktion und in einen Überlauf getrennt.

Aufgabe der Erfindung ist es, ein Verfahren der eingangs angegebenen Art vorzuschlagen, mit dem erreicht werden kann, daß in Restabfall enthaltene, nicht brennbare Stoffe weder in eine Verbrennungsanlage gelangen noch mit einem höheren organischen Anteil als 3 % bzw. 5 % deponiert werden.

Die Lösung der eingangs angegebenen Aufgabe besteht in den kennzeichnenden Merkmalen des Anspruchs 1. Die Komponenten des Gemisches werden - gegebenenfalls nach einer Homogenisierung - in eine brennbare Fraktion und in eine unbrennbare Fraktion getrennt. Anschließend wird die brennbare Fraktion biologisch behandelt, nämlich unter Zwangsbelüftung kompostiert und/oder stabilisiert. Dies geschieht vorzugsweise in einem geschlossenen Behälter. Die Trennung der Fraktionen wird derart durchgeführt, daß die unbrennbare Fraktion weniger als 5 % organische Restsubstanz enthält.

Die Trennung der Fraktionen erfolgt vorzugsweise durch einen Sink-Schwimm-Abscheider.

Es ist ferner vorteilhaft, das Gemisch vor der Trennung in eine brennbare Fraktion und in eine unbrennbare Fraktion zu zerkleinern und/oder zu homogenisieren.

Das erfindungsgemäße Verfahren kann in einer Vorrichtung zur Trennung eines Gemisches von Restabfällen durchgeführt werden. Die Vorrichtung besteht aus einer Trennvorrichtung zum Trennen der Komponenten des Gemisches in eine brennbare Fraktion und in eine unbrennbare Fraktion, vorzugsweise einen Sink-Schwimm-Abscheider, und einer Vorrichtung zum biologischen Behandeln der brennbaren Fraktion, nämlich einem geschlossenen Behälter mit Zwangsbelüftung. Vorzugsweise ist ferner eine Zerkleinerungsvorrichtung und/oder eine Homogenisierungsvorrichtung vorhanden.

Durch die erfindungsgemäße Lösung wird erreicht, daß in Restabfall enthaltene, nicht brennbare Stoffe (z.B. Steine, Keramikteile, Sand, Glas, Metalle und sonstige Schwerstoffe) weder in eine Verbrennungsanlage gelangen noch mit einem höheren organischen Anteil als 3 % (für Bauschuttdeponie) und 5 % (für Hausmülldeponie) deponiert werden, und daß in der brennfähigen Fraktion die nicht brennbaren Stoffe auf weniger als 10 Gewichts-% reduziert werden. Dies wird gewährleistet durch das höchstmögliche Maß an Trennschärfe, das durch die erfindungsgemäße Lösung erreicht werden kann, wenn aus dem Restabfall die Feuchte und die biologisch leicht abbaubare organische Substanz entfernt werden.

Bei der Durchführung des erfindungsgemäßen Verfahrens können bekannte Anlagen mit Verfahren und Vorrichtungen zur Trennung von Restabfällen Verwendung finden, insbesondere Siebanlagen, Windsichtanlagen, Schwerkrafttrennanlagen, Wirbelstromtrennanlagen, und/oder Flotationstrennanlagen.

Durch die erfindungsgemäße Lösung können in einer wesentlich kürzeren Zeit als bisher (ca. eine Woche) vor und/oder nach dem biologischen Abbau der leicht abbaubaren organischen Substanz aus dem getrockneten Restabfall (vorzugsweise wird der Restabfall auf unter 15 % Restfeuchte getrocknet) durch Kombination von Trockenklassierung und Flüssigklassierung inerte und organische Fraktionen getrennt werden. Weiterhin kann erreicht werden, daß die in den Stoffen gebundenen Schadstoffe wasserunlöslich festgelegt sind oder - sofern sie mobil sind - bei dem Spülvorgang entfernt und nach Trennung durch mechanisch-biologische Maßnahmen aus dem Flüssigmedium separat in aufkonzentrierter Form entsorgt werden.

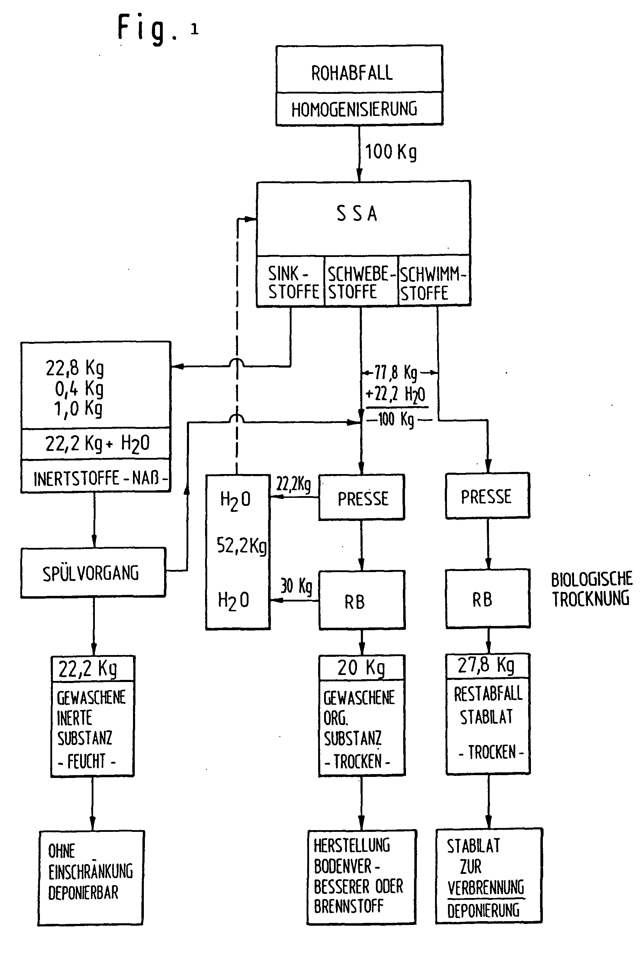

Ein Ausführungsbeispiel der Erfindung wird nachstehend anhand der beigefügten Zeichnung im einzelnen erläutert. In der Zeichnung zeigt
- Fig. 1: ein Ausführungsbeispiel für ein Verfahren und eine Vorrichtung nach dem erfindungsgemäßen Vorschlag in einer schematischen Darstellung.

Bei dem in Fig. 1 gezeigten Ausführungsbeispiel wird der Rohabfall (Rohabfallgemisch) zunächst zerkleinert und homogenisiert und anschließend einem Sink-Schwimm-Abscheider SSA zugeführt. Die dort abgeschiedenen Sinkstoffe bilden eine Fraktion nasser Inertstoffe. Diese Fraktion wird einem Spülvorgang unterworfen, so daß eine feuchte Fraktion gewaschener inerter Substanz entsteht, die ohne Einschränkung deponierbar ist.

Die im Sink-Schwimm-Abscheider abgeschiedenen Schwebestoffe und die im Spülvorgang abgeschiedenen Stoffe werden einer ersten Presse zugeführt. Das dort entstehende Wasser wird in den SSA zurückgeleitet. Von der ersten Presse gelangen die Stoffe in einen ersten geschlossenen Rottebehälter RB, wo sie unter Zwangsbelüftung kompostiert und biologisch getrocknet werden. Hierdurch entsteht eine trokkene Fraktion gewaschener organischer Substanz, die für die Herstellung von Bodenverbesserern oder als Brennstoff geeignet ist.

Die aus dem Sink-Schwimm-Abscheider abgeschiedenen Schwimmstoffe werden einer zweiten Presse zugeführt und gelangen von dort in einen zweiten geschlossenen Rottebehälter, wo sie unter Zwangsbelüftung kompostiert bzw. biologisch getrocknet werden, wodurch eine trockene Fraktion von Restabfall und Stabilat entsteht, die zur Verbrennung und/oder Deponierung geeignet ist. Das in den Pressen und in den Rottebehältern entstehende Wasser wird aufbereitet und in den SSA rückgeleitet. Die Wasseraufbereitung kann aerob und/oder anaerob erfolgen.

In der Fig. 1 ist dargestellt, wie eine Klassierung erfolgt, wenn sie vor dem biologischen Abbau der leicht abbaubaren organischen Substanz durchgeführt wird. Der gesamte Restabfallstrom wird über die Flüssigkeitstrennung geführt, bevor die biologische Trocknung erfolgt. Welcher Weg gewählt wird ist auch davon abhängig, welche Feuchte und/oder welche Korngrößen der Rohrestabfall hat. Es ist bekannt, daß mikrobieller Abbau eine bestimmte Feuchte voraussetzt und diese nicht immer im Restabfall in ausreichendem Maße vorhanden ist.

Die Spülung der inerten Stoffe erfolgt so, daß die jeweils leichteren Partikel im Schwebezustand aus dem Spülwasserkreislauf abgezogen und durch Feuchtsiebung und/oder Schwerkrafttrennung entfernt werden. Die Trennung der schwimmfähigen Fraktionen kann durch Flotation unterstützt werden. Ein weiterer Vorteil besteht darin, daß durch Temperatur- und pH-Wert-Steuerung der Spülflüssigkeit Einfluß genommen werden kann auf die in Lösung gehenden Schwermetalle. Die nach Durchführung des Verfahrens entstehenden Stoffe können mit anderen, dem gleichen Wiederverwertungsziel dienenden Stoffe besser als bisher vermischt bzw. diesen beigemischt werden (z.B. Baustoffherstellung, Brennstoffherstellung etc.).

Die erfindungsgemäßen Verfahren und Vorrichtungen zur Trennung von Restabfällen können mittels Sieb-, Sicht-, Schwimm-, Sink- und/oder Flotationsabscheidung durchgeführt werden. Die einzelnen Stoffkomponenten annähernd gleicher Dichte können vor und/oder nach der biologischen Stabilisierung in einer Rottebox in brennbare und nicht brennbare Fraktionen getrennt werden. Dies kann mit einer Sortenreinheit von mehr als 95 % erfolgen. Durch die Trennung können Inertstoffe mit weniger als 3 % organischer Restsubstanz (für Deponieklasse I) und weniger als 5 % organischer Restsubstanz (für Deponieklasse II) hergestellt werden. Die Fraktion brennbarer Stoffe kann weniger als 10 % mineralische Bestandteile enthalten. Die Schwebefraktion der Flotationsflüssigkeit kann nach Abtrennung durch Flüssigsiebung und/oder Schwerkraftabscheidung im gereinigten Zustand als Bodenverbesserer und/oder Brennstoff Verwendung finden. Die Menge der übrigbleibenden, nicht stofflich verwertbaren Fraktion kann als Trockenstabilat in Ballen verpackt werden. Das Trockenstabilat kann lose oder in Ballen und/oder Briketts verbrannt werden. Die Teilkomponenten der hergestellten Stoffe können mit anderen Stoffen gemischt werden. Die Flüssigklassierung kann vor der biologischen Trocknung der Restabfälle erfolgen. Sie kann aber auch nach der biologischen Trocknung der Restabfälle erfolgen. Die Flüssigklassierung der Schwerstoffraktion biologischer getrockneter Restabfälle kann nach einer Siebung, nach einer Siebung und Wirbelstromtrennung oder nach einer Siebung, Wirbelstromtrennung und/oder Windsichtung erfolgen, wobei die durch biologische Trocknung entstehende Hydrophobie die Abtrennung schwimmfähiger brennbarer Restabfallbestandteile fördert.

## Patentansprüche

1. Verfahren zur Trennung eines Gemisches von Restabfällen,
**dadurch gekennzeichnet,**
**daß** die Komponenten des Gemisches in eine brennbare Fraktion und in eine unbrennbare Fraktion getrennt werden,
wobei die unbrennbare Fraktion weniger als 5 % organische Restsubstanz enthält,
und **daß** die brennbare Fraktion anschließend biologisch behandelt, nämlich in einem geschlossenen Behälter unter Zwangsbelüftung kompostiert und/oder stabilisiert wird.

2. Verfahren nach Anspruch 1, **dadurch gekennzeichnet, daß** die Trennung der Fraktionen durch einen Sink-Schwimm-Abscheider erfolgt.

3. Verfahren nach Anspruch 1 oder 2, **dadurch gekennzeichnet, daß** das Gemisch vor der Trennung in eine brennbare Fraktion und in eine unbrennbare Fraktion zerkleinert und/oder homogenisiert wird.
